# EUROPEAN PATENT APPLICATION

(11) **EP 0 751 678 A1**
(43) Date of publication of application: **02.01.1997**
(21) Application number: 95110135.1
(22) Date of filing: 29.06.1995
(51) Int. Cl.: H04N 5/14, G08B 13/196

(54) **Digital video surveillance system with video data acquisition**

(71) Applicant: CERBERUS AG, CH-8708 Männedorf (CH)
(72) Inventor: Casamassimo, Mario, CH-8708 Männedorf (CH); Piller, Bernhard, Dr., CH-9008 St. Gallen (CH); Ryser, Peter, Dr., CH-8712 Stäfa (CH)

(57) **Abstract**

A digital video surveillance system comprises video cameras that are equipped with a device for direct data transfer from A/D converter to memory. A CPU (4) controls the direct data transfer from A/D converter (3) to a memory device (10) by issuing control signals to the A/D convener (3) and memory device(10) via control lines (33, 34) and READ and WRITE lines (31, 36) and by generating and placing onto an address bus (32) the addresses at which the data is to be stored in the memory device (10). No high-speed CPU or logic gate array is necessary. A preferred realisation of the invention includes a multiplexer circuit (35) attached to the CPU (4) which converts READ pulses issued to the A/D converte (3) by the CPU (4) to WRITE pulses which are in turn transmitted to the memory device (10).

## Description

The present invention relates to a digital video surveillance system intended for monitoring and detection of dangers such as fires or intrusions by unauthorised persons. More particularly, the invention relates to the individual video camera systems, the handling of the received video signals and specifically to a simplified method and device for the accelerated transfer of digital video data from the analog-to-digital A/D converter to memory.

Generally, video surveillance systems monitor areas in order to provide security from dangers such as intrusion and fire. The areas to be monitored are imaged by video cameras and the received video signals are digitised, processed, and transmitted to a display at a central monitoring station such as a building control, a security office, or a police station. The scenes are imaged either continuously or only in the event that an alarm is given by some other danger alarm mechanism, for example, an intrusion or fire detector. The latter type of system is particularly intended to enable examination of the alarm situation. By viewing the displayed image it can be determined whether the given alarm was true or false, that is whether it was triggered by a true violating intrusion or by a disturbance other than fire or human intrusion. Such systems are described in detail for example in US 5,237,408 and US 5,164,979.

In order to provide the necessary complete surveillance of a building or space such surveillance systems typically comprise a great number of intrusion or fire detectors and video cameras. For these applications it is an advantage if the individual video cameras are kept small in size so they can be mounted more easily at the required locations and preferably remain less noticeable. Furthermore it is important to keep the cost of the video camera systems as low as possible as their cost contributes multiplicatively to the system cost.

An individual digital video camera systems consist of the camera itself with a lens and charge-coupled device CCD-array, and an electronics board containing the sampling electronics, the A/D conversion, a microcomputer or central processing unit CPU, memory components and data transfer electronics. The lenses and the CCD-arrays with sampling electronics are competitively low in price in today's cameras. However, the A/D conversion and the transfer of the data into memory requires hardware that is costly and constitutes the largest cost component of the system. This hardware also requires as much board space as all the rest of the camera system.

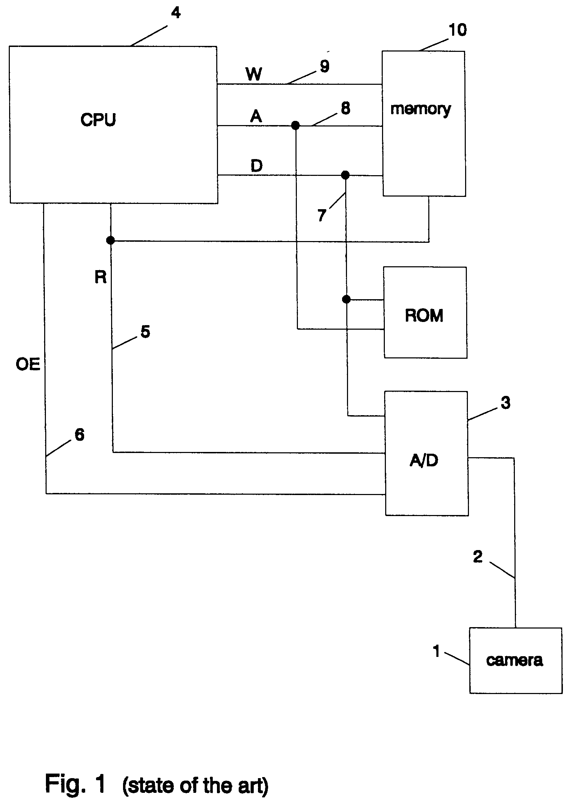

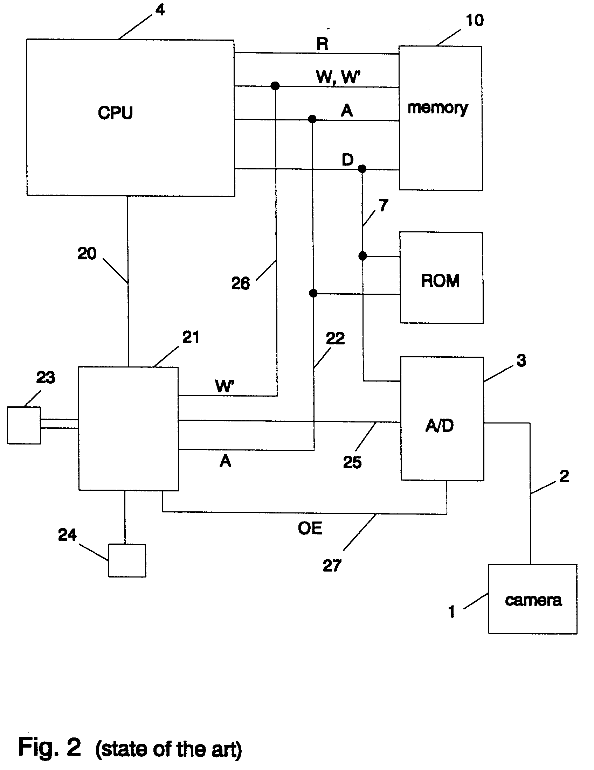

The high cost of the necessary hardware for the data transfer is partially a result of the speed requirements which are given by the video system. The bandwidths of video signals are typically on the order of 10 MHz, and samples are taken at a rate on the order of 150 ns per sample. In state-of-the-art systems the transfer of the data from the A/D converter to memory, for example random access memory RAM, is basically handled in one of two ways. It is either performed by equally highly specified CPU- and RAM-chips or by direct memory access (DMA) with the aid of an external high-speed logic gate array. These data transfer systems of the state of the art are shown schematically in Fig. 1 and 2.

Figure 1 shows a data-transfer system using a high-speed CPU- and memory-chip. The analog video signal generated by a camera 1, for example a CCD-camera, is entered via an input line 2 to the A/D converter 3. The CPU 4, or frequently a digital signal processor (DSP), issues a READ instruction via the READ (R) control line 5. The pulse of this READ instruction provides the clock signal to the A/D converter 3. Once an output-enable signal is received from the CPU 4 via the output-enable line (OE) 6 the data is launched onto the data bus (D) 7. The CPU 4 also generates an address and puts it onto the address bus (A) 8. The data is then read into an internal register of the CPU 4. The CPU 4 then issues a WRITE instruction via the WRITE control line (W) 9 upon which the data contents of the internal register are placed onto the data bus (D) 7 and the memory chip 10 is instructed to take this data and store it at an address to be found on the address bus (A) 8. This same CPU 4 further controls the downloading of the data from memory 10 to communication lines and the display. The digitised data is therefore transferred into memory in two steps. The data transfer requires six instructions from the CPU. If the video data is to be transferred at a rate of 180 ns per sample the CPU and memory need to be able to perform at least 30 MIPS (million instructions per second) to perform the data transfer alone. If any further data processing is to be done a yet faster processor is needed. Such components are expensive and can be bulky. Lower speed processors would not be sufficient for this kind of video application.

Fig. 2 shows a schematic of a data-transfer system by direct memory access (DMA) using an external logic gate array. As in the system above, an analog video signal is entered from a camera 1 via an input line 2 to the A/D converter 3. The CPU 4, or digital signal processor DSP, controls, via a control line 20, a logic gate array 21 which in turn controls the address bus (A) 22 and the data bus (D) 7. The high-speed operations are thus handled by the logic array 21 which receives instructions, for example, when to begin and end such operations from the CPU 4. The logic gate array 21 is equipped with an external clock 23 and an electrically erasable programmable read only memory EEPROM 24 that contains the information of the logic gate array layout. The logic gate array 21 controls the clocking of the A/D converter 3 by sending pulses down the control line 25 to the A/D converter 3. The logic gate array 21 further sends WRITE instructions via the WRITE control line (W') 26 which are synchronised with the clock pulses sent to the A/D converter 3. Once the A/D converter 3 receives an output-enable signal through the output-enable line (OE) 27, it downloads the data onto the data bus (D) 7.

This is then written to the memory device 10 at addresses placed onto the address bus (A) 22 by the logic array 21. Thus, with the help of the logic gate array 21, the transfer of the digitised data to the memory device 10 occurs directly and no longer via internal registers of the CPU 4. The role of the CPU 4 is merely that of giving master instructions over the control line 20 to the logic gate array 21. The logic gate array 21 acts, so to speak, as a slave to its master, the CPU 4. As a master, the CPU 4 is no longer required to work at the same high-speed of the image sampling. Hence, a CPU capable of performing on the order of 30 MIPS is hence no longer required. As the data is transferred directly and the high speed operations are handled by the logic gate array, a CPU 4 and memory 10 specified at lower speeds are sufficient. Whereas this type of data transfer system bears the advantage of lower speed requirements, the logic gate array requires more board space and is also costly.

Typical video systems of this kind of the state of the art contain components specified for video applications. An example is the video RAM, a high-speed RAM capable of handling high data rates. They are specifically designed for this function and are not meant to be implemented for any other functions. Since they are highly specific for the task, they are high in cost.

The methods of the state of the art of data transfer are high in cost and require space for large and numerous components. Their application in video surveillance systems comprising many video cameras is hence limited.

It is the object of the current invention to provide a digital video surveillance system comprising video cameras with a device for direct digital video data transfer from the A/D converter to memory. The direct data transfer performed by this device shall occur sufficiently fast for video applications operating at frequencies on the order of 10 MHz, but requires neither high-cost components nor large circuitry to handle the high data rates. The invention lowers the cost and reduces the size of an individual camera system and allows a flexible implementation in a video surveillance system with a large number of cameras. The invention entails a device and method for a direct data transfer from the A/D converter to memory that dispenses with the logic gate array and requires neither a high-speed CPU nor specific memory device intended for video. The CPU and memory device are then available for further system functions other than for the handling of video data.

### Summary of the invention

According to the invention, a digital video surveillance system comprises video cameras that are equipped with a device for direct data transfer from A/D converter to memory that dispenses with a logic gate array for the control of the READ and WRITE operations and the clocking of the A/D converter and no longer requires a high-speed CPU or DSP. Instead, the CPU controls directly the data transfer by issuing control signals to the A/D converter and the memory device and generates the addresses at which the data is to be stored. The data is transferred directly to memory and is not taken to the CPU. According to a first realisation of the invention, the CPU is modified by the attachment of a simple, small, and inexpensive logic circuit arranged between the memory device and the CPU. The attached circuit consists of a multiplexer (MUX) component which can convert a READ instruction into a WRITE instruction and vice versa. Instead of alternating READ and WRITE instructions, the CPU issues a repeated sequence of READ instructions. The pulses from the READ instructions are used to clock the A/D converter and also enter the multiplexer circuit. The multiplexer converts the READ pulses into WRITE pulses and transmits them to the memory device. The A/D converter places the data onto the data bus once it has received an output-enable signal from the CPU. Since the memory device is ready to receive, the data is directly written to the memory device where it is stored at an address found on the address bus. The data is thus never directed to the CPU. Essentially, the data transfer is accelerated in that for every READ instruction issued by the CPU data is transferred directly to memory and no WRITE instruction from the CPU is necessary. The transfer occurs only in one step and requires approximately half the time per transfer compared to conventional methods. According to a second realisation of the invention the device for the direct data transfer from the A/D converter to memory includes a buffer that is controlled by the CPU. The buffer in turn controls the direction of the data flow on the data bus. Further realisations of the invention include in place of the multiplexer circuit any device, for example relays, that are capable of converting control pulses in the manner performed by a multiplexer circuit.

In the following, the invention is described with reference to the accompanying drawings. As mentioned above, Fig. 1 and 2 are schematics illustrating methods for data transfer from an A/D converter to memory according to the state of the art using a high-speed CPU and a programmable logic gate array, respectively.

Figure 3 is a schematic illustrating the method for data transfer from an A/D converter to memory according to the invention including an attached logic circuit with multiplexer.

Figure 4 is a diagram of the detailed logic circuit attached to the data-transfer circuitry according to the invention.

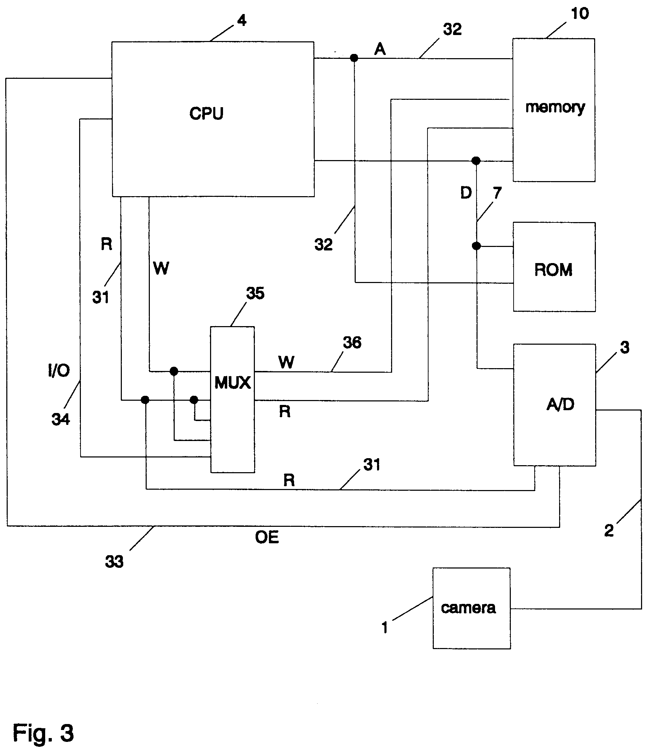

According to the invention, the digital video data is transferred to memory by a device as shown in Fig. 3. Analog video signals generated by a camera 1 enter the A/D converter 3 via an input line 2 and are digitised. The rate at which the data arrives at the A/D converter 3 depends on the type of camera, scan speed, and resolution sought. The camera may be, for example, a CCD-camera with a 512x356 rectangular pixel array. Of these 512x356 pixels, only a portion of the array, for example 320x240 pixels, may be actually sampled so that the final image displayed has an aspect ratio according to common television standards of width to height of 4 to 3. The 320 pixels per line may be scanned according to a scanning standard, for example in a time frame of 62.5 microseconds. The blanking pulses at the beginning and end of the line signal take up a part of this time frame so that a time frame of approximately 50 microseconds of active video is available for the actual sampling of the 320 pixels. The resulting sample time for one pixel is approximately 150 ns and the rate at which video signals are transferred by the camera 1 is approximately 6 MHz. The light intensity falling onto each pixel is represented by a 8-bit word allowing the distinction of 256 grey levels. The transfer of the digitised data to memory is performed according to the following operations. The CPU 4, preferably a DSP, issues a READ instruction, or READ pulses, via the READ control line (R) 31 and places an address onto the address bus (A) 32. The data bus (D) 7 is not controlled by the CPU 4. That is, it is free for the video data to be transferred to the memory device 10 with no bus contention occurring. The READ pulses are received by the A/D converter 3 and used for its clocking. The CPU 4 also sends an output-enable signal to the A/D converter 3 via the output-enable line (OE) 33 which causes the A/D converter 3 to download the data onto the data bus (D) 7. In order for a direct data transfer to the memory device 10 to occur, the CPU 4 sends a 1-bit address onto the input/output line (I/O) 34 to the multiplexer circuit (MUX) 35. The address on the input/output line (I/O) 34 causes the multiplexer circuit 35 to convert the READ pulses from control line 31 to a WRITE instruction. This WRITE instruction is then transmitted to the memory device 10 via the WRITE control line (W) 36. The memory device 10 being instructed to receive data then receives the data from the data bus (D) 7 and stores it at an address found on the address bus (A) 32. The CPU 4 for this data-transfer system is equipped with an internal program cache and data cache. The program cache contains the program instructions for the data transfer so that no program instructions need to be transmitted from ROM via the data bus. Thus the data bus is left free for data transfer from the A/D converter 3 and no bus contention can occur.

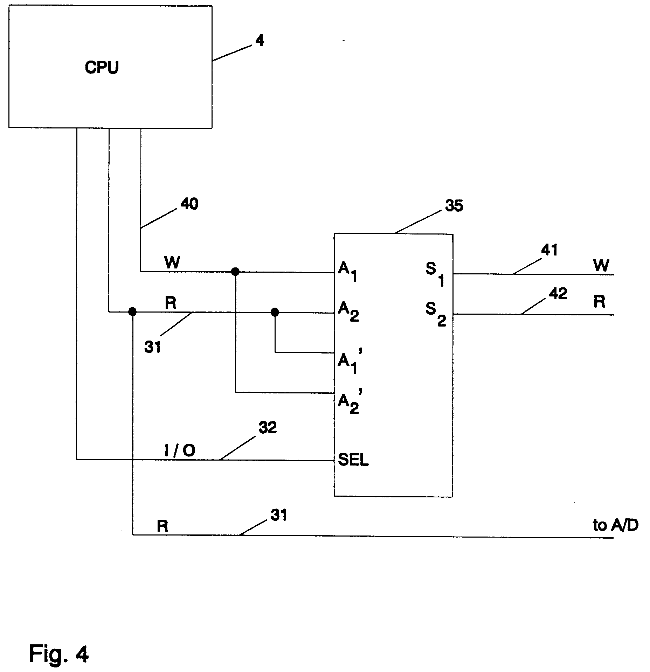

Figure 4 illustrates in detail the function of the mutliplexer circuit (MUX) 35 in the data transfer. The circuit is a 2x2 multiplexer with four inputs A1, A2, A1', and A2' and two output ports S1 and S2. It further has an input select port (SEL) to which the input/output line (I/O) 34 from the CPU 4 is connected. The READ control line (R) 31 is connected to the inputs A2 and A1'; it also leads to the A/D converter 3. The WRITE control line (W) 40 is connected to the inputs A1 and A2'. An outgoing WRITE control line (W) 41 and an outgoing READ control line (R) 42 run from the output ports S1 and S2 respectively. The status of the input select is given by the CPU 4. By this status, the CPU 4 controls the transfer. If the SEL is HIGH, the signal received at port A1' is converted to a WRITE pulse and transmitted to the port S1, and the signal received at A2' is converted to a READ pulse and transmitted to port S2. Alternatively, if the SEL is LOW, signals received at ports A1 and A2 are transmitted to ports S1 and S2 respectively with no signal conversion occurring. For the direct data transfer the CPU 4 gives a HIGH input select status to the port SEL. It also puts out a READ pulse onto the control line 31. The pulse reaches the A/D converter 3 as well as the input ports A2 and A1'. According to the status at SEL, the pulse is transmitted to the output port S1 so that a WRITE instruction is transmitted to the memory device 10. Such a multiplexer circuit takes up very little space on the board and is also very low in cost

The function of the CPU 4 in the transfer system according to this invention is no longer to issue both READ and WRITE instructions, but instead to issue a repeated sequence of READ instructions. Only one instruction is necessary per data transfer to memory. Furthermore, the addresses at which the data is to be stored need to be generated just once (as opposed to twice as in the method of fig. 1; once for the READ process and once for the WRITE process). The addresses are generated by a method that increments the pointer that requires only one program instruction by the CPU that generates the addresses of one byte, sufficient to store the 8-bit data from one pixel.

Using this invention, 6 MIPS are required for the transfer of video data received at a rate of 150 ns per sample. This sample rate allows imaging to an acceptable resolution. The direct transfer method is also suitable for video imaging at a higher resolution or with a greater number of pixels sampled in the same scan time. The same components can still be used. For higher resolution imaging, the cycle time or instruction time per data transfer is reduced accordingly and the instruction speed of the CPU and memory device need to be increased. For example, video data from a camera with a 640x480 pixel array may be transferred if the cycle time or instruction time per data transfer is halved, requiring a doubling of the speed of the CPU and memory.

An attractive variation of the system may be realised by the implementation of a CPU with a phase-locked loop whose frequency may be chosen flexibly. In principle, CPUs with frequencies up to 30 MHz are currently possible, although the necessary memory device needs to be implemented also. Depending on the desired resolution of the image or the dimensions of the pixel array, the frequency of the CPU is set accordingly.

The memory device required for this data transfer method is a standard memory device having the necessary speeds. For example, 100 ns per instruction are sufficient for a 150 ns sample time. The memory device needs no specific capabilities as they are found, for example, in video RAMs. Its function is not exclusively dedicated to the handling of video data, and it is available to be used for other system functions, such as data processing and filtering, downloading the data via modems, data compression, etc.

## Claims

1. Digital video surveillance system comprising video camera systems with a charge-coupled device CCD-array, an analog-to-digital A/D converter (3), a central processing unit CPU (4), a memory device (10), a data bus (7), an address bus (32), a control line (33), and READ and WRITE control lines (31, 36), where the video data is transferred directly from the A/D converter (3) to the memory device (10), characterised in that the CPU (4) controls the direct data transfer from the A/D converter (3) to the memory device (10) by issuing control signals to the A/D converter (3) via the control line (33) and to the memory device (10) via the READ and WRITE lines (31, 36) and in that the CPU (4) generates and places onto the address bus (32) the addresses at which the data is to be stored in the memory device(10).

2. Digital video surveillance system according to claim 1, characterised in that a multiplexer circuit (35) is connected to the CPU (4) by the READ control line (31), the WRITE control line (36), and an input/output control line (34), that the READ control line (31) and the WRITE control line (36) continue from the multiplexer circuit (35) to the memory device (10), and that the CPU (4) issues READ pulses that are transmitted via the READ control line (31) to the A/D converter (3) and to the multiplexer circuit (35) which, upon receipt of a control address from the CPU (4) via the input/output line (34), converts the READ pulses to WRITE pulses and transmits the WRITE pulses to the memory device (10) such that digital data that is placed onto the data bus (7) by the A/D converter (3) upon receipt of an output-enable signal from the CPU (4) via the control line (33) is written directly to the memory device (10) at addresses generated and placed onto the address bus (32).

3. Digital video surveillance system according to claim 1, characterised in that a buffer is used to control the direction of the data bus (7).

4. Digital video surveillance system according to claim 1, characterised in that a relay is controlled by the CPU (4) in order to control the direction of the data bus (7).

5. Digital video surveillance system according to claims 1 and 2, characterised in that the multiplexer circuit (35) is a 2x2 multiplexer.

6. Digital video surveillance system according to any of the claims 1 to 5, characterised in that the CPU (4) is equipped with an internal program cache that contains all the necessary control instructions for the transfer leaving the data bus (7) to be accessed by other devices.

7. Digital video surveillance system according to any of the claims 1 to 6, characterised in that the CPU (4) is equipped with a phase-locked loop that allows the frequency of the CPU (4) to be set flexibly according to the desired sampling rate and image resolution.

8. Digital video surveillance system according to any of the claims 1 to 7, characterised in that the memory device(10) is a random access memory RAM.

9. Digital video surveillance system according to any of the claims 1 to 8, characterised in that digital video data is transferred to the memory device (10) at a rate of 150 ns per pixel sample using 6 MIPS from the CPU (4) and a memory device (10) able to perform an instruction in 100 ns.
